# EUROPÄISCHE PATENTSCHRIFT

(11) **EP 1 327 059 B1**
(45) Veröffentlichungstag und Bekanntmachung des Hinweises auf die Patenterteilung: **07.07.2004**
(21) Anmeldenummer: 01982279.0
(22) Anmeldetag: 12.09.2001
(51) Int. Cl.: F01N 3/022, F01N 3/28, F01N 3/035, F01N 1/24

(54) **EINRICHTUNG ZUM BEHANDELN VON ABGASEN AUS TECHNISCHEN VERBRENNUNGSPROZESSEN**
DEVICE FOR TREATING WASTE GASES RESULTING FROM TECHNICAL COMBUSTION PROCESSES
DISPOSITIF POUR TRAITER DES GAZ D'ECHAPPEMENT PRODUITS PAR DES PROCESSUS TECHNIQUES DE COMBUSTION

(30) Priorität: 14.09.2000 DE 10045342
(43) Veröffentlichungstag der Anmeldung: 16.07.2003
(73) Patentinhaber: Drafas GmbH, 74921 Helmstadt-Bargen (DE)
(72) Erfinder: HAAG, Klaus, 68775 Ketsch (DE)
(74) Vertreter: Hörschler, Wolfram Johannes
(86) Internationale Anmeldenummer: PCT/EP2001/010543
(87) Internationale Veröffentlichungsnummer: WO 2002/023019

(56) Entgegenhaltungen:
- AT-B- 397 694
- GB-A- 2 256 006
- US-A- 2 075 758
- DATABASE WPI Section Ch, Week 198509 Derwent Publications Ltd., London, GB; Class M27, AN 1985-053925 XP002188297 & JP 60 011796 A (NIPPON STEEL CORP), 22. Januar 1985 (1985-01-22)

## Beschreibung

Die Erfindung bezieht sich auf eine Einrichtung zum Behandeln von Abgasen, die bei technischen Verbrennungsprozessen entstehen, so zum Beispiel Abgase aus Verbrennungskraftmaschinen, Abgasen von Feuerungen oder anderen industriellen Anwendungsfällen.

EP 0 505 832 B1 bezieht sich auf einen Filter oder Katalysatorträger. Es wird ein Filteroder Katalysatorkörper vorgeschlagen, zur Beseitigung von schädlichen Bestandteilen aus den Abgasen eines Verbrennungsmotors, insbesondere eines Dieselmotors. Dieser enthält wenigstens eine Gewebelage aus Metalldrähten oder Metallfasern, wobei in die Maschen sinterfähiges Material in Pulver-, Körner-, Faserbruchstück- oder Spanform eingebracht und auf die Drähte bzw. Fasern aufgesintert ist. Das Gewebe ist als ein Körperdrahtgewebe ausgebildet, in dessen Maschen sinterfähiges Material eingebracht und mit den Drähten bzw. Fasern versintert ist.

DE 37 31 766 C2 offenbart ein Rußfilter. Das Rußfilter wird im Abgasstrom einer Brennkraftmaschine, insbesondere einer luftverdichtenden Brennkraftmaschine angeordnet und enthält ein einen Zu- und einem Ableitungsstutzen für den Abgasstrom aufweisendes Gehäuse, in dem ein verstrickte Fasern und mineralische Fäden oder Garne aufweisendes Filtermaterial mehrschichtig oder mehrlagig angeordnet ist. Das Filtermaterial ist zumindest teilweise oder vollständig von einer aus den mineralischen Fäden oder Garnen rundgestrickten Maschenware gebildet.

Aus EP 0 446 422 A1 ist ein Rußfilter für eine luftverdichtende Verbrennungskraftmaschine bekannt geworden. Es wird ein Rußfiter für Dieselmotoren vorgeschlagen mit einem Einlaß zum Einleiten von Abgasen, einem Auslaß und einer zwischen Einlaß und Auslaß gelegenen Filterzone, die eine Vielzahl von rohrförmigen, poröskeramischen Filterkerzen oder Filterzylindem aufweist, durch deren zylindrische Wandungen das Abgas radial eintritt und durch deren axialen Innenraum das Abgas axial wieder austritt. Die porös keramischen Filterkerzen oder Filterzylinder sind an ihren Enden mittels einer Hülse aus Metallgestrick, Metallgewirk, Metallgeflecht oder Metallgewebe radial mittels einer Scheibe axial elastisch gelagert und abgedichtet.

AT 397 694 B bezieht sich auf einen Rußabscheider für Abgase. Der Rußabscheider umfasst ein eine Abgasrohrleitung nachgeordnetes Gehäuse, in dem ein gelochter Abschnitt der Abgasrohrleitung in Rußabscheidematerial eingebettet ist und das Gehäuse einen Abgasauslass aufweist Der gelachte Abschnitt der Abgasrohrleitung verläuft im Rußabscheidematerial mäanderförmig. Das Rußabscheidematerial mitsamt dem eingebetteten Rohrleitungsabschnitt ist in einer aus dem Gehäuse herausziehbaren, mit dem Abgasauslass des Gehäuses in Strömungsverbindung bringbare Lade angeordnet. Die Lade kann mit Bazalt-, Stein-, Krupfer- oder Aluminiumwolle gefullt sein.

GB 2 256 006 A hat einen Abgasschalldämpfer zum Gegenstand. Ein Abgaskanal wird durch verformbare Röhre aus Drahtgeflecht gebildet. Um die verformbare Röhre sind mehrere Dämpfungsschichten angeordnet. Die verformbare Röhre ist in einem Gehäuse aufgenommen. Bei der Erwärmung der verformbaren Röhre bzw. der Dämpfungsschichten dehnen sich diese radial nach aussen an und liegen an der Innenseite des die verformbare Röhre aufnehmenden Gehäuses an.

Schließlich ist aus EP 0 437 685 B1 ein Rußfilter bekannt Der Rußfilter zur Abscheidung von Partikeln aus den Abgasen einer Verbrennungskraftmaschine weist einen temperaturfesten, porösen metallischen Filterkörper aus einem metallischen Werkstoff mit intermetallischen Phasen von Ni, Al oder Ni₃Al auf, wobei der Filterkörper des Rußfilters durch Sintern hergestellt wird. Der Filterkörper besteht aus einem Drahtgeflecht, wobei dem Werkstoff zur Verbesserung der Sinterfähigkeit Metalle oder Metallverbindungen beigemischt sind.

Bei bisherigen Systemen zur Abgasbehandlung im Automobilbau, beispielsweise bei der Abgasschalldämmung, wird das Reflektionsprinzip eingesetzt, in welchem durch Umlenkung und Brechung der Abgasströme mittels eines Mehrkammersystems eine Schalldämmung im Auspuff, sei es im Vor- oder im Hauptschalldämpfer herbeigeführt wird. Beim Absorptionsprinzip erfolgt die Schalldämmung mittels Füllstoffen aus verschiedensten Materialien. Im allgemeinen wird die Lenkung der Abgasströme in einem Schalldämpfersystem durch Lochbleche verschiedenartigster Form, seien es Rohre oder Stanzteile, bewerkstelligt. Aus den genannten Komponenten wird durch Falzen, Schweißen oder ein sonstiges miteinander in Verbindung bringen eine relativ starre Innenkonstruktion des Auspufftopfes erzeugt Die nach Ummantelung der aus Stanzteilen und Rohren bestehenden Innenkonstruktion der sich ergebenden Leerräume werden mit unterschiedlichsten Füllmaterialien, sei es Mineralwolle (Basalt) oder Glaswolle ausgefüllt. Edelstahlwolle wird beispielsweise als Wärmeverteiler und Hitzeschutz für die anderen Füllstoffe verwendet, wobei durch die Edelstahlwolle erste hohe Schallfrequenzen des eintretenden Abgasstromes gebrochen werden.

Das Absorptionsprinzip, dem die bisherigen Schalldämpferkonstruktionen weitestgehend folgen, geht mit dem Nachteil einher, daß durch die Perforation bzw. Stanzung der die Innenkonstrukion des Schalldämpfers darstellenden Teile sehr material- und kostenaufwendig ist, da unterschiedlichste teure Werkzeuge zum Stanzen, Lochen bzw. Bohren und Schweißen benötigt werden und eine nicht unerhebliche Abfallmenge anfällt Gleiches gilt auch für die Konstruktion von Katalysatoren zur Reinigung von Abgasströmen von Verbrennungskraftmaschinen. Die Formung der Lochbleche nach individueller Schalldämpferkonfiguration erfordert eine typenspezifische Gestaltung der Bauteile und ist mit einem hohen Aufwand und erheblicher Kosten. durch Kalibrierung, Stanzung und Lagerhaltung verbunden. Ferner ist das Herstellen einer Verbundkonstruktion, die skelettartig in das Gehäuse eines Schalldämpfers, sei es ein Haupt- oder ein Vorschalldämpfer eingelassen ist, äußerst arbeitsintensiv, wobei die sich einstellende Konstruktion ferner ein hohes Eigengewicht aufweist. Demgegenüber geht der Trend im Automobilbau zu immer leichteren Konstruktionen. Die Befüllung der Leerräume eines mit einem skelettartigen Konstruktion versehenen Schalldämpfers erfolgt heute üblicherweise durch Mineralwolle und Keramik sowie weiteren Materialien. Dies behindert jedoch eine recyclingfähige Ausgestaltung des Auspufftopfes, da zu dessen Recycling, d.h. Einschmelzen zuvor die Mineralwolle bzw. Keramikbestandteile aus dem Inneren des Auspufftopfes entfernt werden müssen, so daß der verbleibende Rest in toto eingeschmolzen werden könnte.

Angesichts der aus dem Stand der Technik aufgezeigten Lösungen einer Abgasbehandlungseinrichtung sowie den aufgezeigten Nachteilen bisher bekannter Schalldämpferkonfigurationen liegt der Erfindung die Aufgabe zugrunde, die Herstellung eines Systems zur Abgasbehandlung, sei es ein Schalldämfpersystem, sei es ein Rußfiltersystem, oder bei Abgaskatalysatoren zur Reinigung von Abgasströmen erheblich zu vereinfachen sowie dessen Recyclingfähigkeit zu verbessern.

Erfindungsgemäß wird diese Aufgabe dadurch gelöst, daß bei einer Einrichtung zur Behandlung von Abgasen, die im Abgasstrom einer Brennkraftmaschine angeordnet ist und die ein Zuleitungs- und ein Ableitungsstutzen aufweist, die beide an einem Gehäuse aufgenommen sind, in welches ein Filtermaterial eingebracht ist, das wenigstens eine Gewebelage aus Metalldrähten oder Metallfasern aufweist, zur Lenkung, zum Rückhalt von im Abgas enthaltenden Partikeln sowie zur Schalldämmung Formkörper in das Gehäuse eingelassen sind, die aus metallischem Fasermaterial die Leerräume des Gehäuses der Einrichtung zur Behandlung von Abgasen ausfüllt.

Die mit der erfindungsgemäß vorgeschlagenen Lösung erzielbaren Vorteile sind vor allem darin zu erblicken, daß die Formkörper, die innerhalb des Gehäuses der Einrichtung zur Behandlung der Abgasströme vorgesehen sind, mit einfachen Mitteln gestaltet werden können und eine enorme Flexibilität hinsichtlich ihrer Geometrien aufweisen. Die Formkörper können beispielsweise so gestaltet werden, daß sie das Gehäuse des Rußfilters oder des Abgaskatalysators oder des Schalldämpfüngskörpers in axiale Richtung, d.h. parallel zur Strömungsrichtung der zu behandelnden Abgasströme durchsetzen, sie können spiralfederartig durch das Innere des Gehäuses sich windend angeordnet werden, sie können aber auch mäanderförmig das Gehäuse durchsetzen, so daß dem Abgasstrom ein langer Weg durch das Gehäuse aufgezwungen werden kann. Daneben sind auch andere die Wegstrecke des das Gehäuse passierenden Gasstrom verlängernde Abgasstromkonfigurationen denkbar. Daneben fällt eine solcherart beschaffene Konfiguration eines Schalldämpfungs-, eines Katalysator- oder eines Rußfiltersystems hinsichtlich des Eigengewichtes wesentlich günstiger aus, als eine vergleichbare Konstruktion unter Verwendung von Blechen, seien sie gelocht oder ungelocht. Das verwendete metallische Verbundmaterial kann aus Edelstahlwolle oder anderen Metallfasern mit hoher Oberfläche bestehen, die in ein als Trägermaterial dienendes Maschengewebe eingearbeitet sind. Dadurch können sämtliche Einzelformteile aus Blechen sowie deren getrennter Einbau in das Innere des Gehäuses des Katalysator-, Schalldämpfer- oder des Rußfiltersystemes entfallen.

In vorteilhafter Ausgestaltung der erfindungsgemäß vorgeschlagenen Einrichtung besteht das metallische Verbundmaterial aus einem als Trägermaterial fungierenden Maschengewebe und in dieses eingebrachte metallische Fasern. Die metallischen Fasern bieten den Vorteil, die dem eintretenden Abgasstrom innewohnende Wärme schnellstens abzuführen und weisen eine hohe Oberfläche auf, was günstig hinsichtlich eines Partikelrückhaltes bei Einsatz in einem Rußfiltersystem ist.

Die aus dem metallischen Verbundmaterial bestehenden, in das Innere des Gehäuses eingelassenen Formkörper sind extrem flexibel zu fertigen, wobei die Fertigung besonders einfach ist. Die Formkörper, als ausschließlich aus metallischem Grundmaterial bestehen, weisen einen entsprechend ihrer Herstellung einstellbare Porösität auf. Die Porösität beeinflußt in entscheidendem Maße die Durchströmgeschwindigkeit des Abgases durch den erfindungsgemäß konfigurierten Schalldämpfer oder Rußfilter, so daß durch die Verpressung der einzelnen Materialien innerhalb des metallischen Verbundwerkstoffes die Verweilzeit des Abagsstromes im Inneren eines Katalysators eines Rußfilters bzw. eines Schalldämpfers beeinflußt werden kann.

Gemäß einer vorteilhaften Ausgestaltungsvariante der erfindungsgemäß vorgeschlagenen Vorrichtung zur Behandlung von Abgasströmen, können in das Innere des Gehäuses eingelassene Formkörper zur Behandlung der Gasströme parallel zur Strömungsrichtung der Abgasströme angeordnet werden. Es lassen sich die unterschiedlichen Abgasströmungswege durch das Innere einer Vorrichtung zur Behandlung von Abgas, sei es ein Rußfilter, ein Katalysator zur Reinigung von Abgas oder eines Schalldämpfers realisieren. Dabei ist unerheblich, ob es sich um ein, zwei oder mehrere sich längs, parallel zur Symmetrieachse eines in runder, ovaler oder auch in anderer Geometrie beschaffenen Gehäuses handelt. Neben einer koaxial verlaufenden Erstreckung der Formkörper aus metallischem Verbundmaterial läßt sich auch ohne weiteres ein mäanderformig verlaufende Erstreckung der Formkörper aus metallischem Fasermaterial durch das Innere des Gehäuses vorstellen, wodurch die Verweilzeit des in den Formkörpern geführten Abgases im Inneren des Gehäuses des Schalldämpfers, des Katalysators oder des Rußfilters verlängert bzw. gezielt beeinflußt werden kann.

Neben der koaxialen Formgebung der Formteile oder einem mäanderförmig einstellbaren Verlauf der Formteile im Inneren des Gehäuses, läßt sich auch eine spiralförmig - ein Gestalt einer Schraubenfeder - gestaltete Formteilgeometrie vorstellen, die in geringem Abstand zum Außenmantel des Gehäuses im Inneren dieses Gehäuses verläuft. Durch die Verlängerung der Formteile, d.h. einer Vergrößerung der Wegstrecke, wird dem Abgas eine längere zu durchlaufende Wegstrecke durch das Innere des Gehäuses aufgezwungen, wodurch einerseits dessen Verweilzeit im Inneren des Gehäuses und damit eine Verbesserung des Partikelrückhaltes und andererseits eine höhere Wärmeabgabe an der Außenfläche des Gehäuses einstellbar ist.

In weiterer Ausgestaltung der erfindungsgemäß vorgeschlagenen Einrichtung ist metallisches Fasermaterial in die Leerräume, d.h. die Räume im Inneren des Gehäuses eingelassen, die nicht von Formteilen aus metallischem Verbundmaterial durchsetzt sind. Dadurch läßt sich eine vibrationsarme Lagerung der Formteile aus metallischem Verbundmaterial erreichen, ferner eine gleichmäßige Erwärmung bzw. Wärmeverteilung des Inneren des Gehäuses. In vorteilhafter Ausgestaltungsmöglichkeit der erfindungsgemäß vorgeschlagenen Einrichtung, sei es ein Rußfilter, ein Schalldämpfer oder ein Abgaskatalysator zur Anwendung im Automobilbereich, kann im Bereich der Eintrittsstirnfläche in das Gehäuse der Anteil vom Edelstahlmaterial im metallischem Verbundmaterial zur Ableitung von Wärme aus dem eintretenden Abgasstrom im Vergleich zum austrittsseitig im Gehäuse angeordneten Edelstahlanteil wesentlich höher liegen.

Die Einrichtung zur Behandlung von Gasströmen läßt sich sowohl im Schalldämpfersystem, sei es als Hauptschalldämpfer oder als Vorschalldämpfer, im Kraftfahrzeug als Rußfilterelement zum Rückhalt von Rußpartikeln bei Nutzfahrzeugen oder bei Personenkraftwagen einsetzen, ferner läßt sich eine erfindungsgemäß vorgeschlagene Konfiguration einer Behandlung von Abgas auch als Katalysator zur Reinigung von Abgasen von Verbrennungskraftmaschinen einsetzen. Ferner kann die erfindungsgemäße Lösung bei stationären Feuerungsstellen in Industrie und Haushalt eingesetzt werden.

Bei der Ausgestaltung der erfindungsgemäß vorgeschlagenen Einrichtung zum Rückhalt von Partikel, d.h. als Rußfilter, kann der Partikelrückhalt, d.h. der Wirkungsgrad der Reinigung des Abgasstromes dadurch signifikant erhöht werden, daß einerseits dem eintretenden Partikel behafteten Abgasstrom einer luftverdichtenden Verbrennungskraftmaschine eine lange Verweilzeit, d.h. eine lange Wegstrecke durch das Innere des Gehäuses aufgezwungen wird. Wird bei Rußfiltern darüber hinaus bei der Herstellung des metallischen Verbundstoffes eine starke Verpressung, oder eine Verwirkung der beiden metallischen Verbundmaterialien eingestellt, stellt sich im metallischem Verbundmaterial, welches das Innere des Gehäuses nahezu vollständig ausfüllt, eine Porösität ein, welche den Rückhalt von Partikeln aus dem Abgasstrom signifikant verbessert.

Anhand der Zeichnung wird die Erfindung nachstehend detaillierter beschrieben.

Es zeigt:
- Figur 1: einen Querschnitt durch ein teilweises geöffnetes Gehäuse einer Einrichtung zur Behandlung von Abgasen mit darin schematisch dargestellten Formkörpern und
- Figur 2: einen sich axial erstreckenden Formkörper einfacherer Geometrie aus metallischem Verbundwerkstoff.

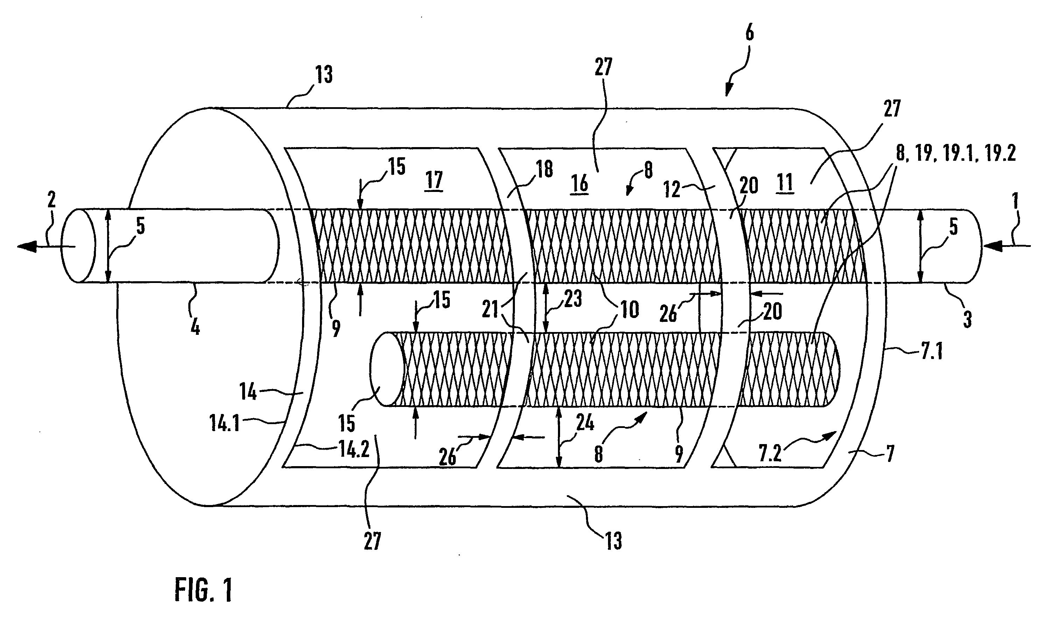

Aus der Darstellung gemäß Figur 1 ist eine Einrichtung zum Behandeln eines Abgasstromes, beispielsweise eine Schalldämpfereinrichtung an Verbrennungskraftmaschinen in schematischer Konfiguration entnehmbar.

Aus der Darstellung gemäß Figur 1 geht hervor, daß ein eintretender Abgasstrom 1 einer Verbrennungskraftmaschine, sei es eine Benzin verbrennende Verbrennungskraftmaschine oder eine luftverdichtende Verbrennungskraftmaschine, durch einen Eintrittsstutzen 3 in das Innere eines Gehäuses 6 einer Einrichtung zum Behandeln des Abgasstromes 1 eintritt.

In der Konfiguration gemäß Figur 1 entspricht der Stutzendurchmesser 5 im wesentlichen dem Durchmesser der im Inneren des Gehäuses 6 eingelassenen, aus einem metallischen Verbundmaterial 19 bestehenden Formkörper 8, von denen in der Darstellung gemäß Figur 1 zwei dargestellt sind, die sich im wesentlichen parallel zur Symmetrielinie des Gehäuses 6 erstrecken. Der Eintrittsstutzen 3 ist an der Außenseite 7.1 einer Eintrittstirnseite 7 des Gehäuses 6 der Einrichtung zur Behandlung des Abgasstromes befestigt. Durch eine Öffnung mündet der Eintrittsstutzen unmittelbar in den im Inneren des Gehäuses 6 vorgesehenen, den ersten Leerraum 11 sowie weitere Leerräume 16 bzw. 17 durchsetzenden Formkörper 8.

An der Austrittsseite des Gehäuses 6 ist ein Austrittsstutzen 2 vorgesehen, der an der Außenseite 14.1 der Austrittsstirnseite 14 befestigt ist und der analog zum Eintrittsstutzen 3 im Stutzendurchmesser 5 ausgeführt ist, der im wesentlichen dem Außendurchmesser 15 des Formkörpers aus metallischem Verbundmaterial 19 entspricht. Durch den Austrittsstutzen 2 verläßt ein entsprechend behandelter Abgasstrom 2 das Innere des Gehäuses 6. Das Gehäuse 6 kann Bestandteil einer Schalldämpferanlage sein, ferner einer Anlage zur Reinigung von Abgasen, sei es ein Rußfilter oder sei es ein Abgaskatalysator, wie er heute im Automobilbau eingesetzt wird.

Das Gehäuse 6 umfaßt neben den Stirnflächen 7 und 14 einen Außenmantel 13, der sich zylinderförmig um die Stirnseiten 7 bzw. 14 erstreckt. Zwischen den Stirnseiten 7, 14 sind unterteilt durch Wandungselemente 12, 18 im Inneren des Gehäuses 6 einzelne Leeräume 11, 16 und 17 gebildet. Die erwähnten Leeräume im Inneren des Gehäuses 6 sind mit Füllmaterial, welches metallisches Fasermaterial ist, angefüllt sein, um die Schalldämpfung, beispielsweise bei Schalldämpfersystemem sowie die Wärmeleitung bei heißen eintretenden Abgasströmen 1 zu verbessern.

In der Darstellung gemäß Figur 1 sind die Formkörper 8, von denen zwei exemplarisch dargestellt sind, im wesentliche in koaxialer Richtung zur Geometrielinie des Gehäuses 6 verlaufend dargestellt. In bezug auf dem im Gehäuse 6 aufgenommenen oberen Formkörper 8, der im wesentlichen koaxial zum Eintritts- und Austrittsstutzen 3, 4 aufgenommen ist, befindet sich ein weiterer Formkörper 8, nur in abgebrochener Darstellung wiedergegeben, parallel zum die Stutzen 3 bzw. 4 miteinander verbindeten Formkörper 8 im Inneren des Gehäuses 6. Neben der hier dargestellten Geometrie der Formkörper 8 können diese auch durch das Innere des Gehäuses 6 einen mäanderförmigen Verlauf nehmen, um den eintretenden Abgasstrom 1 eine längere Wegstrecke durch das Innere des Gehäuses 6 aufzuzwingen, sowie dessen Verweilzeit im Inneren des Gehäuses 6 zu erhöhen. Eine längere Verweilzeit im Inneren des Gehäuses 6 der Einrichtung zum Behandeln von Abgasströmen erlaubt eine weitere Temperaturabnahme des eintretenden Abgasstromes 1 sowie ein besseres Rückhalteergebnis bei Rußfilteranordnungen im Hinblick auf die Rückhalterate der im Abgas einer luftverdichtenden Verbrennungskraftmaschine enthaltenen Rußpartikel.

Neben einer mäanderformig ausgestalteten Führung der Formkörper durch das Innere des Gehäuses 6 lassen sich diese auch nach Art einer Sprialfeder in einzelnen Windungen entlang des Außenmantels 13 des Gehäuses 6 durch das Innere des Gehäuses 6 führen. Dies hat den Vorteil, daß neben einer guten Wärmeübergang an die äußere Fläche des Gehäuses 6 dem eintretenden Abgasstrom 1 die längsmögliche Verweilzeit im Inneren des Gehäuses 6 aufgeprägt wird, was bei einer luftverdichtenden Verbrennungskraftmaschine mit dem positiven Effekt einhergeht, daß die im Abgas enthaltenden Partikel weitestgehend ausgefiltert werden können.

Im in Figur 1 dargestellten Ausführungsbeispiel sind die Formkörper 8 die einzelnen Wandungen 12, 18 im Bereich von Öffnungen 20 bzw. 21 durchsetzend dargestellt. Die Formkörper 8 bestehen aus metallischem Faserverbundmaterial mit den Komponenten 19.1 und 19.2. Mit Bezugszeichen 19.1 ist das als Trägermaterial fungierende Maschengewebe bezeichnet, dessen Maschen eine unterschiedliche Größe aufweisen und beliebige Geometrie annehmen können und in die ein metallisches Fasermaterial, beispielsweise Edelstahlwolle eingelassen sein kann. Die hier als stabförmig konfigurierten Formkörper 8 sind an ihren Außenflächen 9 jeweils von Füllmaterial umgeben, welches vorzugsweise metallisches Fasermaterial ist. Damit besteht das Innere des Gehäuses 6 zur Gänze aus metallischem Material, was dessen Recyclingfähigkeit günstig beeinflußt, da nun ein Separieren unterschiedlicher Werkstoffe, wie beispielsweise Keramik, Glasfaser, Mineralwolle bei dem Wiederverwendungsvdrgang der erfindungsgemäß konfigurierten Einrichtung zur Behandlung von Abgasströmen entfallen kann. Eine gesonderte Entsorgung von Mineral- oder Glaswolle, die bei bisherigen Konfigurationen als Füllstoffe in den Leerräumen 11, 16, 17 eingelassen war, kann nunmehr entfallen, was die Recyclingfähigkeit der erfindungsgemäß vorgeschlagenen Einrichtung, sei es als Schalldämpfer, als Rußfilter oder als Abgaskatalysator eingesetzt, positiv beeinflußt.

Aus der Darstellung gemäß Figur 1 geht hervor, daß die in komplexesten Geometrien einfach herstellbaren Formteilen 8 im Inneren des Gehäuses 6 untereinander in einem Abstand, der mit Bezugszeichen 23 identifiziert ist, angeordnet sind. Die einzelnen Formteile im Inneren des Gehäuses 6, ummantelt von der Außenfläche 13, können zu dieser im Abstand von einem größeren Abstand 24 angeordnet werden. Durch den Abstand 24, zwischen der Außenfläche der Formkörper 8 aus metallischem Verbundmaterial 19 und der Innenwandung des Außenmantels 13 des Gehäuses 6 wird die in diesem Bereich anzuordnende Menge von Füllmaterial, welches vorzugsweise metallisches Fasermaterial ist, bestimmt. Dadurch läßt sich der Wärmeübergang des die Formkörper 8 durchströmenden Abgases an die Außenseite der Mantelfläche 13 des Gehäuses 6 beeinflussen. Neben einer Strömungsführung des eintretenden Abgasstromes 1 durch die aus metallischem Verbundmaterial 19 gefertigten und komplexeste Geometrien aufweisenden Formkörper 8 in Mäander- oder Spiralform läßt sich der Wärmeübergang vom eintretenden Abgasstrom 1 an die Mantelfläche 13 des Gehäuses 6 auch durch die Beabstandung der aus metallischem Verbundmaterial gefertigten Formkörper in einem vorzuwählenden Abstand 24 vorherbestimmen.

Um den hohen Temperaturen Rechnung zu tragen, mit denen der eintretende Abgasstrom 1 durch den Eintrittsstutzen 3 in das Innere des Gehäuses 6 eintritt, kann im Bereich der eintrittsseitigen Stirnfläche 7 sowohl in den Formkörpern 8, die aus metallischem Verbundmaterial 19 bestehen, als auch um diese umgebenden Füllmaterial im ersten Leerraum 11 ein höherer Edelstahlanteil vorhanden sein, welcher eine bessere Wärmeableitung gewährleistet. An der austrittsseitigen Stirnfläche 14 des Gehäuses 6 kann der Edelstahlanteil im metallischem Verbundmaterial geringer ausfallen, da die Austrittstemperatur des austretenden Gasstromes 2 aus dem Inneren des Gehäuses 6 der Einrichtung zur Behandlung von Abgasströmen in der Regel niedriger liegt, als die Eintrittstemperatur des eintretenden noch unbehandelten Abgasstromes 1. Obwohl an einem Schalldämpfer für Abgasströme veranschaulicht, ist der Aufbau eines Katalysators zur Reinigung von Abgasen oder der Aufbau eines Rußfilters zur Ausfilterung von Partikeln analog zum in Fig. 1 skizzierten Schalldämpfer aufgebaut.

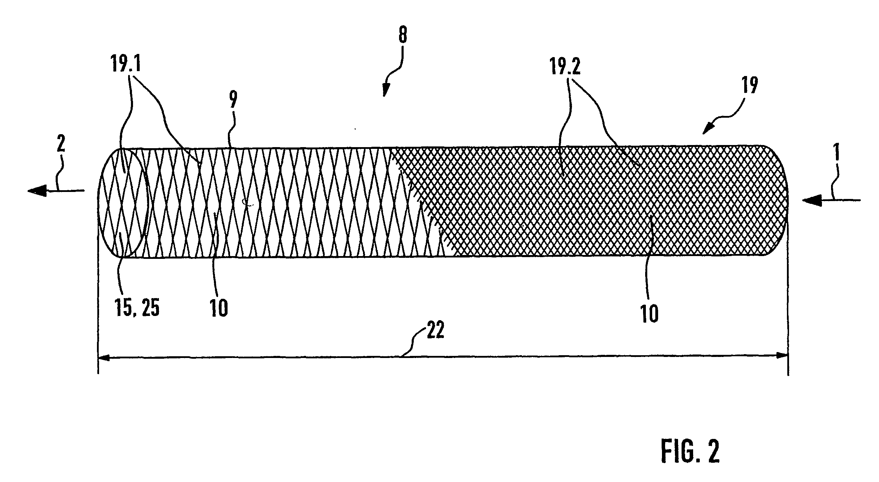

Aus der Darstellung gemäß Figur 2 geht ein hier nur schematisch wiedergegebenes Formkörperbauteil 8 näher hervor.

Das Formkörperbauteil 8 besteht aus verpreßtem oder miteinander verwirkten und dadurch in seiner Porösität hinsichtlich der Durchtrittsfähigkeit für Abgasströme beeinflußbaren metallischen Verbundmaterial 19. Das Verbundmaterial 19 weist einerseits einen als Trägergewebe dienendes Maschengewebe 19.1, welches eine Maschenweite und eine beliebige Maschengeometrie, sei es rund, eckig, rautenförmig oder dergleichen aufweisen kann. In die im Trägermaterial 19.1 vorhandenen Einzelmaschen sind metallische Fasern 19.2 eingelassen, die beispielsweise erschmolzen oder auf dem Zerspanungswege hergestellt werden können. Beide Materialien 19.1 und 19.2 können miteinander verpreßt, verwirkt oder auf jede andere erdenkliche Art und Weise miteinander verbunden sein, so daß sich ein Verbundmaterial ergibt. Je nach Porösität, die sich durch den Grad der Verpressung bzw. der Verwirkung der metallischen Verbundmaterialien 19.1 und 19.2 einstellt, läßt sich die Rückhalterate von Partikeln, beispielsweise Rußpartikeln aus dem Abgas von luftverdichtenden Verbrennungskraftmaschinen positiv beeinflussen. Wird beim Ausfiltern die Verweilzeit durch eine spiralförmige oder mäanderförmig konfigurierte Abgasströmungsführung durch das Innere des Gehäuses 6 gewählt und die Porösität im Formkörper 8 günstig gewählt, kann mit einem solcherart aus rein metallischem Werkstoff bestehenden Rußfilter, oder Abgaskatalysator eine signifikante Partikelrückhalterate im Abgasstrom einer hier nicht dargestellten luftverdichtenden Verbrennungskraftmaschine erzielt werden. Daneben ist ein solcherart konfiguriertes Rußfiltersystem oder Katalysatorsystem auf einfachstem Wege zu entsorgen, da es ausschließlich aus metallischem Werkstoffen besteht und daher leicht eingeschmolzen werden kann. Eine Separierung unterschiedlicher Materialien, wie Glas-, Mineralwolle oder Keramikwerkstoffe ist bei einem solcherart beschaffenem Rußfilter nicht erforderlich. Auch bei dem Einsatz der erfindungsgemäß vorgeschlagenen Einrichtung zur Behandlung von Abgas als Rußfilter oder als Abgaskatalysator, läßt sich eine dem Temperaturverlauf des eintretenden Abgasstromes 1 Rechnung tragende Edelstahlmaterialverteilung im Inneren des Gehäuses realisieren. So kann beispielsweise auch bei Rußfiltern oder Katalysatoren im Bereich der Leeräume 11, die der eintrittsseitigen Stirnseite 7 des Gehäuses 8 am nächsten liegen, ein höherer Edelstahlanteil zur Verbesserung der Wärmeleitung vorgesehen werden, verglichen mit der austrittsseitigen Stirnseite 14 am Gehäuse 6 der Einrichtung zur Behandlung von Abgasströmen 1. Die Füllung der verbleibenden Leerräume 11, 16 und 17 des Gehäuses kann beispielsweise mit Edelstahlwolle bewerkstelligt werden, da diese im Gegensatz zu den bereits erwähnten Glaswolle- oder Mineralwollematerialien recyclingfähig ist und Separationsvorgänge entfallen können.

Aus der Darstellung gemäß Figur 2, in welcher die Durchströmungsrichtung des Formkörpers 8 durch den eintretenden Abgasstrom 1 sowie den austretenden, behandelten Abgasstrom 2 dargestellt ist, erfolgt über die Querschnittsfläche 15, die im dargestelltem Ausführungsbeispiel gemäß Figur 2 etwa kreisförmig konfiguriert ist. Im Innenbereich 10 des aus metallischem Verbundmaterial 19 bestehenden Formkörper 8 ist die durch die Herstellung des Formkörpers 8 vorgegebene Porösität eingestellt, die zu den günstigen Ergebnissen hinsichtlich der Rückhalte von Rußpartikeln im Abgas von luftverdichtenden Verbrennungskraftmaschinen führt.

Die Außenmantelfläche 9 des Formkörpers 8 wird - obwohl in Figur 2 nicht dargestellt - von Füllmaterial umgeben, welches ebenfalls metallisches Verbundmaterial 19 ist und welches in den Leeräumen 11, 16, 17 (vergl. Figur 1) des Gehäuses 6 der Einrichtung zur Behandlung von Abgasströmen zur Schalldämmung untergebracht ist. Neben der Schalldämmung ist durch das Füllmaterial 19 darüber hinaus eine Verbesserung der Wärmeleitung und des Wärmeübergangs von den heißen eintrittsseitig anstehenden Abgasströmen an die Außenmantelfläche 13 des Gehäuses 6 möglich.

Mit der erfindungsgemäß vorgeschlagenen Konfiguration einer Einrichtung zum Behandeln von Abgas können an diese Einrichtung in Gestalt eines topfförmigen Gehäuses vollständig aus Metall gefertigt werden, was die Recyclingfähigkeit positiv beeinflußt und Separationsvorgänge zum Trennen unterschiedlicher Materialien überflüssig macht. Das Eigengewicht der erfindungsgemäß vorgeschlagenen Ausgestaltung einer Einrichtung zur Behandlung von Abgasströmen ist verglichen mit den herkömmlichen Skelettkonstruktionen aus Lochblechen und Rohren signifikant reduziert, ferner kann die arbeitsintensive und kostenintensive Skelettkonstruktion, wie sie bisher üblich war bei Schalldämpfer, Rußfiltern oder Abgaskatalysatoren nunmehr volllständig entfallen. Auch eine Lagerhaltung unterschiedlichster Lochblechkonfigurationen für typenspezifische Schalldämpferkonfigurationen bei Kraftfahrzeugen kann nunmehr vollständig entfallen.

### Bezugszeichenliste

- 1: Eintretender Abgasstrom
- 2: Austretender Abgasstrom
- 3: Eintrittsstutzen
- 4: Austrittsstutzen
- 5: Stutzendurchmesser
- 6: Gehäuse
- 7: Eintrittsstimseite
- 7.1: Außenseite
- 7.2: Innenseite
- 8: Formkörper
- 9: Außenmantel
- 10: Innenbereich
- 11: Leerraum
- 12: Wandung
- 13: Mantelfläche
- 14: Austrittsstimseite
- 14.1: Außenseite
- 14.2: Innenseite
- 15: Querschnitt Formkörper
- 16: Leerraum
- 17: Leerraum
- 18: Wandung
- 19: metallisches Verbundmaterial
- 19.1: Trägergewebe
- 19.2: Trägergewebe + Metallfasern
- 20: Durchtrittsöffnung Wandung 12
- 21: Durchtrittsöffnung Wandung 18
- 22: Formkörperlänge
- 23: Abstand
- 24: Abstandmantelfläche
- 25: Durchtrittsfläche
- 26: Wandungsstärke
- 27: Füllmaterial Leerräume 11, 16, 17

## Patentansprüche

1. Einrichtung zur Behandlung von Abgasen (1), die im Abgasstrom einer Brennkraftmaschine oder in der Abgasleitung stationärer Feuerungsstellen angeordnet ist und die eine Zuleitungsstutzen (3) und einen Ableitungsstutzen (4) aufweist, die an einem Gehäuse (6) aufgenommen sind, in welches ein Filtermaterial (9) eingebracht ist, das wenigstens eine Gewebelage aus Metalldrähten oder Metallfasern aufweist, wobei Leerräume (11, 16, 17) innerhalb des Gehäuses (6) mit metallischen Fasern (19.2) ausgefüllt sind, **dadurch gekennzeichnet, dass** zur Lenkung des Abgasstromes (1), zum Partikelrückhalt sowie zur Schalldämmung Formkörper (8) im Gehäuse (6) vorgesehen sind, die aus einem metallischen Faserverbundmaterial (19) mit einem als Trägergewebe dienenden Maschengewebe (19.1) sowie in dessen Einzelmaschen verpresste oder verwirkte metallische Fasern (19.2) bestehen.

2. Einrichtung gemäß Anspruch 1, **dadurch gekennzeichnet, dass** die in das Innere des Gehäuses (6) eingelassenen Formkörper (8) zur Behandlung der Gasströme (1, 2) parallel zur Strömungsrichtung der Abgasströme (1, 2) angeordnet sind.

3. Einrichtung gemäß Anspruch 1, **dadurch gekennzeichnet, dass** die Formkörper (8) einen mäanderformigen Verlauf durch das Innere des Gehäuses (6) nehmen.

4. Einrichtung gemäß Anspruch 1, **dadurch gekennzeichnet, dass** die Founkörper (8) spiralförmig durch das Innere des Gehäuses (6) laufend angeordnet sind.

5. Einrichtung gemäß Anspruch 1, **dadurch gekennzeichnet, dass** die Leerräume (11, 16, 17) im Gehäuse (6) mit metallischem Fasermaterial als Füllmaterial befüllt sind.

6. Einrichtung gemäß Anspruch 1, **dadurch gekennzeichnet, dass** im Bereich der Eintrittsstirnfläche (7) des Gehäuses (6) der Anteil von Edelstahlmaterial (19.2) im Verbundmaterial (19) zur Leitung von Wärme aus dem eintretenden Abgasstrom (1) bezogen auf die austrittsseitig aufgenommene Begrenzung (14) des Gehäuses (6) höher ist.

7. Einrichtung gemäß Anspruch 1, **dadurch gekennzeichnet, dass** diese als Hauptund/oder Vorschalldämpfer bei einem Abgassystem eingesetzt wird.

8. Einrichtung gemäß Anspruch 1, **dadurch gekennzeichnet, dass** diese als Rußfilter zum Rückhalt von Partikeln aus den eintretenden Abgasstrom (1) beschaffen ist.

9. Einrichtung gemäß Anspruch 8, **dadurch gekennzeichnet, dass** der Partikelrückhalt durch die Formkörper (8) von deren Längserstreckung (22), deren Durchtrittsfläche (25) sowie der durch die Porosität des metallischen Verbundmaterials (19) der Körper (8) beeinflussbar ist.

10. Einrichtung gemäß Anspruch 1, **dadurch gekennzeichnet, dass** diese als Abgaskatalysator zur Reinigung von Abgasströmen eingesetzt wird,

## Claims

1. Device for treating exhaust gases (1) which is arranged in the exhaust-gas stream from an internal combustion engine or in the exhaust-gas line from stationary combustion installations and which has a feed-line connection stub (3) and a discharge-line connection stub (4), which are held on a housing (6) which contains a filter material (19) which has at least one fabric layer made from metal wires or metal fibres, empty spaces (11, 16, 17) inside the housing (6) being filled with metallic fibres (19.2), **characterized in that** for diversion of the exhaust-gas stream (1), for particulate retention and for muffling, there are shaped bodies (8) in the housing (6), which consist of a metallic fibre composite material (19) having a woven mesh (19.1), which serves as a support fabric, and metallic fibres (19.2) which are knitted or pressed into its individual meshes.

2. Device according to Claim 1, **characterized in that** the shaped bodies (8) which are incorporated in the interior of the housing (6) for treating the gas streams (1, 2) are arranged parallel to the direction of flow of the exhaust-gas streams (1, 2).

3. Device according to Claim 1, **characterized in that** the shaped bodies (8) adopt a meandering path through the interior of the housing (6).

4. Device according to Claim 1, **characterized in that** the shaped bodies (8) are arranged so as to run helically through the interior of the housing (6).

5. Device according to Claim 1, **characterized in that** the empty spaces (11, 16, 17) in the housing (6) are filled with metallic fibre material as filler material.

6. Device according to Claim 1, **characterized in that** in the region of the inlet end face (7) of the housing (6) the proportion of stainless steel material (19.2) in the composite material (19) is higher than at the outlet-side boundary (14) of the housing (6), in order to conduct heat out of the incoming exhaust-gas stream (1).

7. Device according to Claim 1, **characterized in that** it is used as a main and/or front muffler in an exhaust system.

8. Device according to Claim 1, **characterized in that** it is provided as a particle filter for retaining particulates from the exhaust-gas stream (1) which enters it.

9. Device according to Claim 8, **characterized in that** the retention of particulates by the shaped bodies (8) can be influenced by their longitudinal extent (22), their passage surface area (25) and by the porosity of the metallic composite material (19) of the bodies (8).

10. Device according to Claim 1, **characterized in that** it is used as an exhaust-gas catalytic converter for purifying exhaust-gas streams.

## Revendications

1. Dispositif pour traiter des gaz d'échappement (1), qui est disposé dans le courant de gaz d'échappement d'un moteur à combustion ou dans la conduite d'évacuation des gaz d'échappement d'installations de combustion fixes et qui comporte un raccord (3) d'admission et un raccord (4) de sortie, disposés sur un boîtier (6), dans lequel est placé un matériau (9) de filtrage qui comporte au moins une couche tissée de fils ou de fibres métalliques, les espaces vides (11, 16, 17) à l'intérieur du boîtier (6) étant remplis de fibres métalliques (19.2), **caractérisé en ce que**, pour orienter le courant (1) de gaz d'échappement, pour retenir les particules, ainsi que pour l'amortissement phonique, sont prévus dans le boîtier (6) des corps moulés (8), qui se composent d'un matériau composite métallique (19) en fibres avec un tissu maillé (19.1) servant de tissu de support, ainsi que des fibres métalliques (19.2) pressées ou engagées dans les mailles individuelles du tissu.

2. Dispositif selon la revendication 1, **caractérisé en ce que** les corps moulés (8) emprisonnés à l'intérieur du boîtier (6) sont disposés pour traiter les courants de gaz (1, 2) parallèlement à la direction d'écoulement des courants de gaz d'échappement (1,2).

3. Dispositif selon la revendication 1, **caractérisé en ce que** les corps moulés (8) prennent une configuration en forme de méandres à l'intérieur du boîtier (6).

4. Dispositif selon la revendication 1, **caractérisé en ce que** les corps moulés (8) sont disposés en courant en forme de spirales à l'intérieur du boîtier (6).

5. Dispositif selon la revendication 1, **caractérisé en ce que** les espaces vides (11, 16, 17) dans le boîtier (6) sont remplis de matériaux métalliques fibreux servant de matériaux de remplissage.

6. Dispositif selon la revendication 1, **caractérisé en ce que**, dans la zone de la surface frontale d'entrée (7) du boîtier (6), la proportion de matériaux (19.2) en acier allié dans le matériau composite (19) pour conduire la chaleur hors du courant de gaz d'échappement (1) entrant, est plus grande que celle de la zone (14) du boîtier (6), prise du côté de la sortie.

7. Dispositif selon la revendication 1, **caractérisé en ce qu'**il est utilisé comme amortisseur phonique principal et/ou préamortisseur phonique dans un système de gaz d'échappement.

8. Dispositif selon la revendication 1, **caractérisé en ce qu'**il est réalisé comme un filtre à suies ou à particules pour retenir les particules du courant de gaz d'échappement (1) entrant.

9. Dispositif selon la revendication 8, **caractérisé en ce que** la retenue des particules par les corps moulés (8) est susceptible d'être influencée par l'extension en longueur (22) et par la surface de traversée (25) des corps moulés (8), ainsi que par la porosité du matériau composite métallique (19) des corps (8).

10. Dispositif selon la revendication 1, **caractérisé en ce qu'**il est utilisé comme catalyseur de gaz d'échappement pour l'épuration de courants de gaz d'échappement.
